# EUROPEAN PATENT SPECIFICATION

(11) **EP 2 280 586 B1**
(45) Date of publication and mention of the grant of the patent: **21.03.2018**
(21) Application number: 10007619.9
(22) Date of filing: 22.07.2010
(51) Int. Cl.: H05B 37/02, H05B 33/08, F21Y 105/00, F21S 8/02, F21V 21/04

(54) **Illumination fixture**
Beleuchtungshalterung
Appareil d'éclairage

(30) Priority: 28.07.2009 JP 2009175894
(43) Date of publication of application: 02.02.2011
(73) Proprietor: Panasonic Intellectual Property Management Co., Ltd., Osaka-shi, Osaka 540-6207 (JP)
(72) Inventor: Nagaoka, Shinichi, Niigata (JP)
(74) Representative: Rüger, Barthelt & Abel

(56) References cited:
- WO-A1-2005/018286
- CN-Y- 2 366 688
- CN-Y- 201 039 528
- US-A1- 2003 117 803
- US-A1- 2006 181 416

## Description

### [Field of the Invention]

The present invention relates to an illumination fixture including a light-emitting part and a lighting device, the light-emitting part having a light-emitting element and the lighting device lighting and lighting off the light-emitting part based on an output from a sensor part having an infrared sensor element.

### [Background Art]

In recent years, with demands for energy-saving illumination fixtures, illumination fixtures and lamps including a light-emitting part formed of a white light source using a low power-consumption LED element have been used.

Also, an illumination fixture placed in a building has been provided, the illumination fixture including a lighting device that lights and lights-off a light-emitting part based on an output from an infrared sensor element, such as a pyroelectric sensor, the illumination fixture capable of reducing power consumption by automatically lighting off the light-emitting part when nobody is in a sensing area of the infrared sensor element and there is no output from the infrared sensor element.

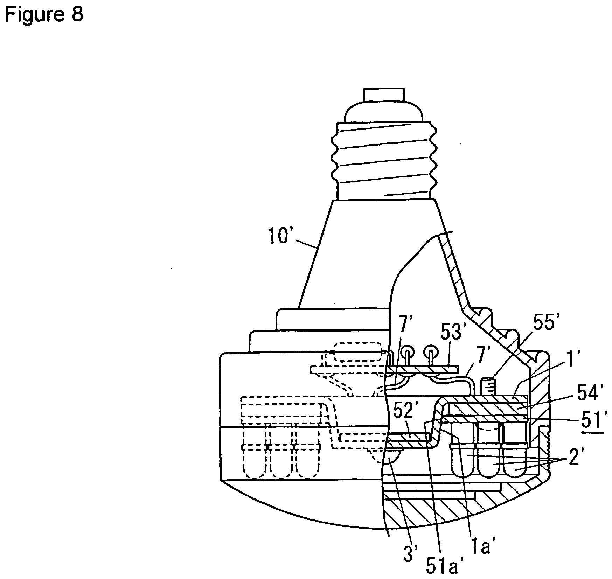

As an illumination fixture of this type, conventionally, as depicted in Fig. 8, an illumination fixture has been suggested that includes: a plurality of light-emitting parts 2' using LED elements; a circuit substrate 51' having the plurality of light-emitting parts 2' implemented thereon and having a circuit pattern (not shown) for connecting the plurality of light-emitting parts 2' in series formed thereon; a sensor part 3' formed of an infrared sensor element that detects an infrared ray emitted from a human body; a control substrate 52' provided with the sensor part 3' and a control circuit (not shown) for controlling a power supply circuit, which will be mentioned below, based on an output from the sensor part 3'; a power supply substrate 53' having the circuit substrate 51' and the control substrate 52' each connected thereto via a lead line 7' and provided with the power supply circuit (not shown) that supplies power to the light-emitting part 2'; a base substrate 1' formed in a disk shape and having the circuit substrate 51' mounted on one surface side and the control substrate 52' mounted on the other surface side; and a fixture main body 10' having an outer shape in an electric-light bulb shape and supporting the base substrate 1' having the circuit substrate 51' and the control substrate 52' mounted thereon so that the one surface side is oriented to a direction in which light is emitted from the light-emitting part 2' and the power source substrate 53' is disposed on the other surface side of the base substrate 1', wherein the control circuit controls an output from the power supply circuit based on an output from the sensor part 3' to supply and stop an electric current from the power supply circuit to the circuit substrate 51', thereby lighting and lighting off the plurality of light-emitting parts 2' (refer to Patent Document 1). Here, the lighting device is configured of the lighting circuit, the control circuit, and the power supply circuit.

Here, the base substrate 1' is formed in a shape in which a protruding portion 1a' is provided at a center portion, protruding to one surface side and having a circular shape in a plan view. A tip face of the protruding portion 1a' of the base substrate 1' has a sensor insertion hole (not shown) penetrating therethrough, the sensor insertion hole being open in a circular shape in a plan view and being set so that its inner diameter is larger than the outer diameter of the sensor part 3' having a circular shape in a plan view. At a center portion of the circuit substrate 51', a protruding-portion insertion hole 51a' for insertion of the protruding portion 1a' of the base substrate 1' is open. With the protruding portion 1a' of the base substrate 1' being inserted in the protruding-portion insertion hole 51a' the circuit substrate 51' is mounted on the one surface side of the base substrate 1' via a heat-dissipating member 54' using silicone rubber or the like. Also, with the sensor part 3' being inserted in the sensor insertion hole, the control substrate 52' is mounted on the other surface side of the protruding portion 1a' of the base substrate 1'. Note that the circuit substrate 51' is screwed into the base substrate 1' with a mounting screw 55', and the heat-dissipating member 54' is interposed between the circuit substrate 51' and the base substrate 1'.

Also, conventionally, an illumination fixture has been suggested in which a substrate has implemented thereon a light-emitting part having an LED element and the substrate has connected thereto a heat sink that dissipates heat occurring at the light-emitting part to dissipate the heat occurring at the light-emitting part (refer to Patent Document 2).

Furthermore, conventionally, an illumination fixture has been suggested in which a light-emitting element formed of an LED element and a terminal part configured of a plurality of terminals electrically connected to the light-emitting element are disposed on one substrate and a slit is formed on the substrate to separate the light-emitting element and the terminal part in view of heat to interrupt heat occurring at the light-emitting element and then being transmitted to the terminal part via the substrate, thereby suppressing an increase in temperature at the terminal part (refer to Patent Document 3).

CN 2 366 688 Y shows a lamp with light emitting parts and an infrared sensor. The light emitting parts are positioned on a chassis. The sensor is positioned in a sheath that is attached to a cylindrical part that is connected to a dome shaped part which is connected to the chassis.

US 2006/0181416 shows a bulb that is adapted with an infrared sensor.

### [Conventional Technique Document]

### [Patent Document]

[Patent Document 1] Japanese Unexamined Patent Application Publication No. 2001-325810
[Patent Document 2] Japanese Unexamined Patent Application Publication No. 2004-179048
[Patent Document 3] Japanese Unexamined Patent Application Publication No. 2009-9846

### [Disclosure of the Invention]

### [Problems to be solved by the Invention]

Meanwhile, as can be seen in the heat-dissipating measures of the illumination fixtures described in Patent Documents 2 and 3, generally speaking, the amount of heat dissipation of the light-emitting part formed of an LED element is large, and the amount of infrared rays radiated from the light-emitting part is large. Therefore, when the plurality of light-emitting parts 2' are disposed so as to surround the periphery of the sensor part 3' as those in the illumination fixture configured as in Fig. 8, the sensor part 3' is heated by infrared rays radiated from the plurality of light-emitting parts 2' to increase the temperature of the sensor part 3'. Also, when the sensor part 3' is formed of an infrared sensor element that detects an infrared ray emitted from a human body, disturbance noise occurs in an output from the sensor part 3' due to a change in the amount of infrared rays radiated from the light-emitting parts 2' according to the lighting and lighting-off of the light-emitting parts 2', thereby causing the control circuit to erroneously operate the illumination fixture.

The present invention has been devised in view of the above, and its object is to provide an illumination fixture including a fixture main body in which a light-emitting part and a sensor part that detects an infrared ray are disposed, the illumination fixture capable of reducing an erroneous operation by suppressing an increase in temperature of the sensor part and suppressing the occurrence of disturbance noise in an output from the sensor part due to a change in infrared rays according to the lighting and lighting-off of the light-emitting part.

### [Means adapted to solve the Problems]

According to a first aspect of the present invention, an illumination fixture includes a light-emitting part having a light-emitting element; a sensor part having an infrared sensor element; a lighting device having control means adapted to light and light off the light-emitting part by controlling power to be supplied to the light-emitting part based on an output from the sensor part; and a fixture main body that holds the light-emitting part and the sensor part, wherein: a barrier wall that lets visible light emitted from the light-emitting part pass and interrupts an infrared ray radiated from the light-emitting part toward the sensor part is disposed between the light-emitting part and the sensor part, the barrier wall being formed in a shape so as not to interfere with a sensing area of the sensor part.

According to this aspect of the present invention, since the barrier wall that interrupts the infrared ray radiated from the light-emitting part toward the sensor part is disposed between the light-emitting part and the sensor part, the barrier wall interrupts the infrared ray radiated from the light-emitting part. Therefore, an increase in temperature of the sensor part due to the infrared ray radiated from the light-emitting part toward the sensor part can be suppressed, and also the occurrence of disturbance noise in the output from the sensor part due to a change in the amount of infrared rays radiated from the light-emitting part toward the sensor part according to the lighting and lighting-off of the light-emitting part can be suppressed. Therefore, an erroneous operation of the illumination fixture can be suppressed. Also, since the barrier wall lets the visible light emitted from the light-emitting part pass, a decrease in use efficiency of the visible light emitted from the light-emitting part can be suppressed. Furthermore, since the barrier wall is formed in a shape so as not to interfere with the sensing area of the sensor part, part of the infrared ray entering the sensor part from the outside is prevented from being interrupted by the barrier wall. Therefore, shrinking of the sensing area of the sensor part by the barrier wall can be suppressed.

According to a second aspect of the present invention, in the first aspect of the present invention, the illumination fixture includes the fixture main body having an opening for removing the visible light emitted from the light-emitting part to outside of the fixture main body and a light-transmitting panel disposed so as to cover the opening of the fixture main body; the light-transmitting panel is formed of a material that lets the visible light emitted from the light-emitting part pass and interrupts the infrared ray radiated from the light-emitting part toward the sensor part; and the barrier wall is formed so as to be successively integrated with the light-transmitting panel.

According to this aspect of the present invention, the fixture main body has an opening for removing the visible light emitted from the light-emitting part to outside, includes a light-transmitting panel disposed so as to cover the opening of the fixture main body, and the light-transmitting panel is formed of a material that lets the visible light emitted from the light-emitting part pass and interrupts the infrared ray radiated from the light-emitting part toward the sensor part. With the barrier wall being formed so as to be successively integrated with the light-transmitting panel, compared with the case where the barrier wall and the light-transmitting panel are separate bodies, the number of components can be reduced. Thus, an improvement in assembling and a reduction in cost can be achieved.

According to a third aspect of the present invention, in the first aspect of the present invention, the illumination fixture includes a first base substrate formed in a plate shape and having a through hole penetrating through a center portion and a second base substrate formed in a plate shape and having an outer shape formed smaller than the through hole and disposed inside the through hole; the light-emitting part is mounted on the first base substrate and the sensor part is mounted on the second base substrate; the barrier wall is formed of a material that lets the visible light emitted from the light-emitting part pass and interrupts the infrared ray radiated from the light-emitting part toward the sensor part and has a plurality of first leg pieces and a plurality of second leg pieces extending from an end face of the barrier wall on a first base substrate side and an end face on a second base substrate side to the first base substrate side and the second base substrate side; each of the first leg pieces has a tip portion formed with a first nail piece protruding to a side facing an inner perimeter portion of the through hole of the first base substrate; each of the second leg pieces has a tip portion formed with a second nail piece protruding to a side facing an outer perimeter portion of the second base substrate; and with each of the first leg pieces and each of the second leg pieces being inserted in a space between the first base substrate and the second base substrate to engage the first nail pieces in a perimeter portion of the through hole of the first base substrate and engage the second nail pieces in the outer perimeter portion of the second base substrate, the barrier wall is mounted on the first base substrate and holds the second base substrate.

According to this aspect of the present invention, the illumination fixture includes a first base substrate formed in a plate shape and having a through hole penetrating through a center portion and a second base substrate formed in a plate shape and having an outer shape formed smaller than the through hole and disposed inside the through hole; the light-emitting part is mounted on the first base substrate and the sensor part is mounted on the second base substrate; a space is formed between the first base substrate and the second base substrate. Thus, compared with the case where the light-emitting part and the sensor part are disposed on the same base substrate, heat transmitting from the light-emitting part to the sensor part can be reduced. Therefore, an increase in temperature of the sensor part can be suppressed.

According to a fourth aspect of the present invention, in the first aspect of the present invention, the illumination fixture includes a base substrate formed in a plate shape; the light-emitting part and the sensor part are mounted on the base substrate; the barrier wall is formed of a material that lets the visible light emitted from the light-emitting part pass and interrupts the infrared ray radiated from the light-emitting part toward the sensor part and has a plurality of leg pieces extending from an end face on a base substrate side to the base substrate side; each of the leg pieces has a tip portion formed with a nail piece; and with each of the leg pieces being inserted in a slit provided between the light-emitting part and the sensor part on the base substrate to engage the nail piece in a perimeter portion of the slit, the barrier wall is removably mounted on the base substrate.

According to this aspect of the present invention, the illumination fixture includes a base substrate formed in a plate shape; the light-emitting part and the sensor part are mounted on the base substrate; the barrier wall is formed of a material that lets the visible light emitted from the light-emitting part pass and interrupts the infrared ray radiated from the light-emitting part toward the sensor part and has a plurality of leg pieces extending from an end face on a base substrate side to the base substrate side; each of the leg pieces has a tip portion formed with a nail piece; and with each of the leg pieces being inserted in a slit provided between the light-emitting part and the sensor part to engage the nail piece in a perimeter portion of the slit, the barrier wall is removably mounted on the base substrate. Thus, heat occurring at the light-emitting part can be prevented from transmitting via the base substrate to the sensor part, and therefore an increase in temperature of the sensor part can be suppressed. Also, since the barrier wall is removably mounted on the base substrate, assembling can be improved compared with the third aspect of the present invention.

According to a fifth aspect of the present invention, in any one of the first to fourth aspects of the present invention, the barrier wall is formed of a tube-shaped portion formed in a tube shape and having the sensor part disposed therein and a cone-shaped portion formed in a cone shape connected to the tube-shaped portion and having an inner diameter larger as being away from the tube-shaped portion.

According to this aspect of the present invention, the barrier wall is formed of a tube-shaped portion formed in a tube shape and having the sensor part disposed therein and a cone-shaped portion formed in a cone shape connected to the tube-shaped portion and having an inner diameter larger as being away from the tube-shaped portion. Thus, with part of the sensing area of the sensor part being set so as not to be interrupted by the barrier wall even when the outer diameter of the tube-shaped portion in the barrier wall is decreased, the outer diameter of the tube-shaped portion in the barrier wall can be decreased to decrease a distance between the light-emitting part and the sensor part. Therefore, while the size of the sensing area of the sensing part is kept, the illumination fixture can be downsized.

### [Effect of the Invention]

According to the first aspect of the present invention, since the barrier wall interrupts the infrared ray emitted from the light-emitting part, an increase in temperature of the sensor part due to the infrared ray can be suppressed, and also the occurrence of disturbance noise in the output from the sensor part due to a change in the amount of infrared rays radiated from the light-emitting part toward the sensor part according to the lighting and lighting-off of the light-emitting part can be suppressed. Therefore, an erroneous operation of the illumination fixture by the control means can be suppressed. Also, since the barrier wall lets the visible light emitted from the light-emitting part pass, a decrease in use efficiency of the visible light emitted from the light-emitting part can be suppressed. Furthermore, since the barrier wall is formed in a shape so as not to interfere with the sensing area of the sensor part, part of the infrared ray entering the sensor part from the outside is prevented from being interrupted by the barrier wall. Therefore, shrinking of the sensing area can be suppressed.

### [Brief Description of the Drawings]

Fig. 1 is a partially-broken side view of an illumination fixture of a first embodiment.
Fig. 2 is a schematic perspective view of the above illumination fixture.
Fig. 3 depicts the above illumination fixture, in which (a) is a schematic sectional view, (b) is a schematic plan view of main parts.
Fig. 4 is a schematic sectional view of another example of the above illumination fixture.
Fig. 5 is a schematic sectional view of an illumination fixture of a second embodiment.
Fig. 6 depicts an illumination fixture of a third embodiment, in which (a) is a schematic plan view of main parts, (b) is a schematic sectional view, (c) is a schematic plan view of main parts of another example, and (c) is a schematic sectional view of the other example.
Fig. 7 depicts an illumination fixture of a fourth embodiment, in which (a) is a schematic sectional view, and (b) is a schematic plan view of main parts.
Fig. 8 is an exploded perspective view of an illumination device of a conventional example.

### [Best Mode for Carrying Out the Invention]

### (First Embodiment)

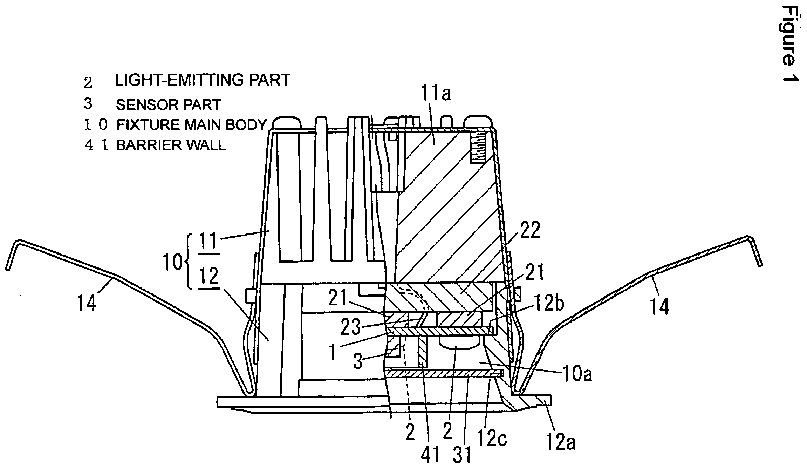

The present embodiment is described based on Fig. 1 to Fig. 4.

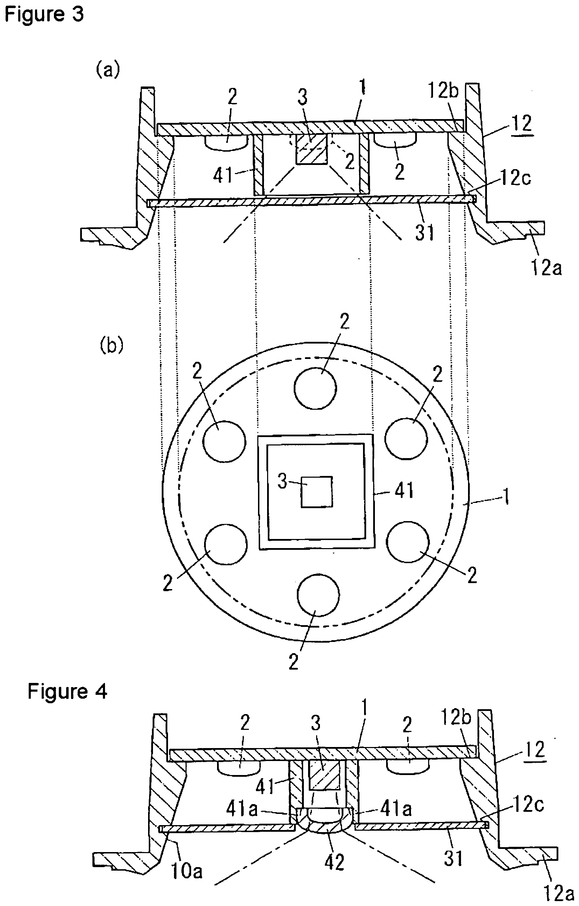

An illumination fixture of the present embodiment is an LED illumination fixture of a type buried in a ceiling, and includes: a plurality of (in an example depicted in Fig. 3, six) light-emitting parts 2 formed of LED elements (not shown), which are light-emitting elements using LED chips; a sensor part 3 (refer to Fig. 3) having an infrared sensor element that detects an infrared ray emitted from a human body; a lighting device (not shown) having a control circuit part (not shown), which will be mentioned below and is control means adapted to light and light off the light-emitting parts 2 by controlling power to be supplied to the light-emitting parts 2 based on an output from the sensor part 3; and a fixture main body 10 in which the light-emitting parts 2 and the sensor part 3 are disposed. Also, the illumination fixture of the present embodiment includes: a base substrate 1 formed in a circular plate shape in a plan view and formed of a printed board having the light-emitting parts 2 and the sensor part 3 mounted on one surface side; and a light-transmitting panel 31 formed of a light-transmitting material (for example, acrylic resin) in a circular plate shape, the light-transmitting material letting visible light emitted from the light-emitting parts 2 pass. Note that the light-transmitting panel 31 may have a surface processed in a prism shape so that light transmitting through the light-transmitting panel 31 has directivity.

As depicted in Fig. 3 (b), the plurality of light-emitting parts 2 are disposed so as to be uniformly spaced in one circumferential direction surrounding the periphery of the sensor part 3 disposed at a center portion of the base substrate 1 having a circular shape in a plan view in consideration of distribution of light from the illumination fixture. Also, a heat-dissipating metal plate 21 is fixed onto the other surface side of the base substrate 1.

The light-emitting part 2 each includes: an LED chip; an implementation substrate (not shown) on which the LED chip is mounted; an optical member (not shown) formed in a dome shape for controlling distribution of light emitted from the LED chip and formed of a light-transmitting material fixed onto one surface side of the implementation substrate so as to accommodate the LED chip in a space between the optical member and the implementation substrate; a sealing part (not shown) formed of a light-transmitting material (for example, silicone resin, epoxy resin, or glass) that seals the LED chip and a bonding wire (not shown) electrically connected to the LED chip in a space surrounded by the optical member and the implementation substrate; and a color converting member (not shown) disposed so as to cover the optical member from one surface side of the implementation substrate and formed in a dome shape and of a light-transmitting material having a fluorescent material dispersed therein, the fluorescent material being pumped by light emitted from the LED chip and transmitting through the sealing member and the optical, and emitting light of a color different from that of the LED chip. Also, between the surfaces of the color converting member and the optical member, an air layer (not shown) is provided. The air layer has a function of suppressing light scattered by the fluorescent material to the optical member side in the color converting member and light emitted from the fluorescent material from transmitting through the optical member to be absorbed into the implementation substrate or the like, thereby improving efficiency of taking out light from the light-emitting part 2. Here, as the LED chip, GaN-system blue LED chip that emits blue light is used. As the fluorescent material distributed in the color converting material, a yellow fluorescent material is used. From the light-emitting parts 2, white light is emitted. Note that the light-emitting parts 2 are not meant to be restricted to those described above. For example, an ultraviolet LED chip emitting ultraviolet shine may be used as the LED chip and, as fluorescent materials distributed in the color converting member, a red fluorescent material, a green fluorescent material, and a blue fluorescent material may be used. Also, in place of the color converting member, a light-transmitting member (not shown) not containing a fluorescent material may be used and, as fluorescent materials, a red LED chip, a green LED chip, and a blue LED chip may be used as the LED chips.

Furthermore, in the sensor part 3, as the infrared sensor element, for example, a pyroelectric-type sensor element is used.

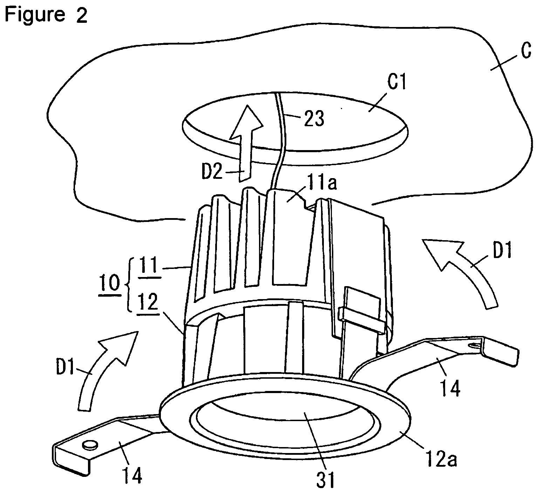

As depicted in Fig. 1 and Fig. 2, the fixture main body 20 is configured of a cylinder-shaped casing 12 and a heat-dissipating block 11 provided with a plurality of heat-dissipating fins 11a and mounted on the casing 12 with a mounting screw (not shown). Also, on the outside of the casing 12, a plurality of (in the example depicted in Fig. 1 and Fig. 2, two) mounting springs 14 are provided for mounting the fixture main body 10 on a ceiling member C (refer to Fig. 2). Here, a side opposite to the heat-dissipating block 11 side in the casing 12 configuring part of the fixture main body 10 configures an opening 10a for taking out visible light emitted from the light-emitting parts 2 to the outside.

The casing 12 has an outer collar portion 12a extending outward from the entire outer perimeter of a lower end portion. Also, on an inner surface of the casing 12, a step portion 12b is formed over the entire perimeter at a center portion in a center axis direction of the casing 12 and a groove portion 12c is formed over the entire perimeter at a lower end portion in the center axis direction. Here, the groove portion 12c has notch parts (not shown) at a plurality of places in a circumferential direction. Inside of the casing 12, the base substrate 1 is disposed as being inserted from an upper end side of the casing 12 and having its outer perimeter portion on one surface side abutting on the step portion 12b. Furthermore, on the other surface side of the base substrate 1 inside of the casing 12, a heat-dissipating resin sheet 22 is disposed, which is a heat-dissipating member for dissipating heat occurring at the light-emitting parts 2. Here, with the casing mounted on the heat-dissipating block 11 with the mounting screw and the heat-dissipating block 11 pushing the outer perimeter portion of the base substrate 1 onto the step portion 12b of the casing 12 via the heat-dissipating resin sheet 22, the base substrate 1 is fixed to the inside of the casing 12. Here, the heat-dissipating resin sheet 22 has a lower surface side in contact with the heat-dissipating metal plate 21 of the base substrate 1 and an upper surface side in contact with the heat-dissipating block 11. Thus, heat occurring at the light-emitting parts 2 is dissipated to the outside via the heat-dissipating block 11 provided with the heat-dissipating metal plate 21, the heat-dissipating resin sheet 22, and the heat-dissipating fins 11a. Note that, as the heat-dissipating resin sheet 22, for example, a sheet-shaped sealing member formed by densely filling an inorganic filler in epoxy resin can be used.

Also, the light-transmitting panel 31 formed in a circular plate shape is mounted on the casing 12. The light-transmitting panel 31 has protruding portions (not shown) protruding in a centrifugal direction provided at a plurality of places of the outer perimeter portion. With the light-transmitting panel 31 being rotated in a circumferential direction after the protruding portions are inserted from the notch parts formed at the plurality of places of the above-described groove portion 12c, the outer perimeter portion fits in the groove portion 12c. Note that the light-transmitting panel 31 may have a surface processed in a prism shape so as to have directivity.

The lighting device is provided outside of the fixture main body 10, and includes: a rectifying and smoothing part (not shown) that rectifies and then smoothes alternating-current power supplied from a commercial power supply (not shown) to output a direct current; a constant-current power supply part (not shown) for supplying a current of a certain magnitude to the light-emitting parts 2; the control circuit part, which is the control means electrically connected to the sensor part 3 to control the power supplied from the constant-current power supply part to the light-emitting parts 2 based on an output from the sensor part 3; and a control power supply part (not shown) for supplying power to the control circuit part.

The base substrate 1 is disposed inside of the casing 12 with the outer perimeter portion abuts on the step portion 12b of the casing 12. Also, to the base substrate 1, a power source line 23 for supplying power to the light-emitting parts 2 and the sensor part 3 and signal lines (not shown) for electrically connecting the sensor part 3 and the control circuit part together are connected. The power source line 23 is drawn to the outside of the fixture main body 10 though a power-source-line insertion hole (not shown) provided in the heat-dissipating block 11, and the signal line is drawn to the outside of the fixture main body 10 through a signal-line insertion hole (not shown) provided on the heat-dissipating block 11. Here, the constant-current power supply part of the lighting device and the light-emitting parts 2 are electrically connected to each other via the power source line 23 and a wiring pattern (not shown) formed on the base substrate 1. Furthermore, the control circuit part of the lighting device and the sensor part 3 are electrically connected to each other via a signal line (not shown) and a wiring pattern (not shown) formed on the base substrate.

The illumination fixture of the present embodiment is disposed on an inner side of a mounting hole C1 penetrating through a ceiling member C (refer to Fig. 2) and having a circular shape in a plan view. In the illumination fixture of the present embodiment, mounting springs 14 as being pushed down toward a side surface of the fixture main body 10 (refer to an arrow D1 in Fig. 2) are inserted in the mounting hole C1 (refer to an arrow D2 in Fig. 2). Furthermore, when pressed into a depth side of the mounting hole C1 until the outer collar portion 12a of the casing 12 abuts on a lower surface of the perimeter portion of the mounting hole C1 of the ceiling member C, the mounting springs 14 are open in a direction away from the fixture main body 10. Here, with part of the mounting springs 14 elastically in contact with an upper surface of the perimeter portion of the mounting hole C1 of the ceiling member C and with the outer collar portion 12a of the casing 12 and the part of the mounting springs 14 interposing the ceiling member C, the fixture main body 10 is mounted on the ceiling member C. That is, the illumination fixture has the configuration depicted in Fig. 1 and Fig. 2 in which the fixture main boy 10 is mounted on the ceiling member C with the outer collar portion 12a of the casing 12 and the mounting springs 14 interposing the ceiling member C. Still further, a power supply device (not shown) for supplying power to the illumination fixture is placed separately from the illumination fixture.

Meanwhile, in the illumination fixture of the present embodiment, a barrier wall 41 formed in a square tube shape and made of a material (for example, acrylic resin) having a high transmittance of visible light emitted from the light-emitting parts 2 and a low transmittance of infrared rays radiated from the light-emitting parts 2 toward the sensor part 3 to interrupt the infrared ray is disposed between the light-emitting parts 2 and the sensor part 3 so as to surround the perimeter of the sensor part 3 on the one surface side of the base substrate 1.

Thus, since the barrier wall 41 roughly interrupts the infrared ray radiated from the light-emitting parts 2 toward the sensor part 3, an increase in temperature of the sensor part 3 due to the infrared rays radiated from the light-emitting parts 2 toward the sensor part 3, and also the occurrence of disturbance noise in the output from the sensor part 3 due to a change in the amount of infrared rays according to the lighting and lighting-off of the light-emitting parts 2 can be suppressed. Therefore, an erroneous operation of the illumination fixture can be reduced. Also, since the barrier wall 41 lets the visible light emitted from the light-emitting parts 2 pass, a decrease in use efficiency of the visible light emitted from the light-emitting parts 2 can be suppressed.

Still further, as depicted in Fig. 3 (a), the barrier wall 41 is formed to have a height from the one surface of the base substrate 1 so as not to interfere with a sensing area of the sensor part 3. That is, when an angle formed by an incident direction of an infrared ray that forms the largest angle with the normal of a plane passing through the center of a light-receiving plane (not shown) of the infrared sensor element and including the light-receiving plane and the normal is defined as a detection angle, the height is set so that, among infrared rays that can be detected by the infrared sensor element included in the sensor part 3, an infrared ray having an angle formed by the incident direction to the infrared sensor element and the normal smaller than the detection angle is not inhibited. That is, the height of the barrier wall 41 is set so as not to interfere with the sensing area of the sensor part 2.

Thus, since part of the infrared rays entering the sensor part 3 from outside is not interrupted by the barrier wall 41 (refer to a one-dot-chain line in Fig. 3 (a)), shrinking of the sensing area of the sensor part 3 by the barrier wall 41 can be suppressed.

Note that, as depicted in Fig. 4, the illumination fixture of the present embodiment may have a lens 42 for collecting infrared rays provided on a front surface side of the sensor part 3. In this case, the sensing area of the sensor part 3 can be advantageously expanded.

In the illumination fixture of the present embodiment having the configuration depicted in Fig. 4, a step portion 41a is provided at an end portion opposite to a base substrate 1 side in the barrier wall 41, and a lens mounting hole (not shown) is provided inside of the step portion 41a by piercing. On the other hand, on an outer perimeter portion of the lens 42, a protrusion (not shown) is provided in a protruding manner. With the lens 42 fitting in the step portion 41a, the protrusion engages in the lens mounting hole to cause the lens 42 to be fixed to the barrier wall 41. Still further, since a mounting member (not shown) for mounting the lens 42 is not required at the time of manufacturing, assembling can be improved. Note that the lens 42 may be fixed onto the barrier wall 41 with glue.

### (Second Embodiment)

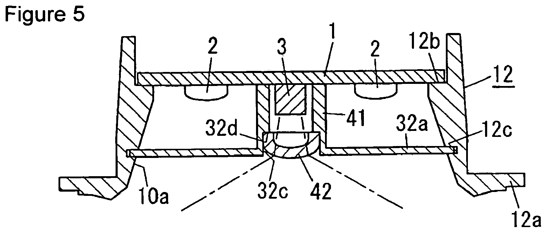

As depicted in Fig. 5, in an illumination fixture of the present embodiment, as with the first embodiment, the fixture main body 10 has the opening 10a for taking out visible light emitted from the light-emitting parts 2 to the outside, and a light-transmitting panel 32a is disposed so as to cover the opening 10a. On the other hand, the illumination fixture of the present embodiment is different from that of the first embodiment in that the barrier wall 41 is successively integrated with the light-transmitting panel 32a. Note that a configuration similar to that of the first embodiment is provided with the same reference character and is not described herein.

The light-transmitting panel 32a is formed in a circular plate shape and has a through hole 32c penetrating through the center portion. The barrier wall 41 is formed so as to be successively integrated with a perimeter portion of the through hole 32c of the light-transmitting panel 32a, and protrudes to one surface side in a thickness direction of the light-transmitting panel 32a. Here, the light-transmitting panel 32a and the barrier wall 41 are formed of a material (for example, acrylic resin or glass) having a high transmittance of visible light radiated from the light-emitting parts 2 and having a low transmittance of infrared rays radiated from the light-emitting parts 2 toward the sensor part 3. Also, a step portion 32d is formed at an end portion opposite to a base substrate 1 side in the barrier wall 41, and the step portion 32d has mounted thereon the lens 42 for collecting infrared rays.

Thus, compared with the case in which the barrier wall 41 and the light-transmitting panel 31 are separately provided as in the first embodiment, the number of components can be reduced, and therefore assembling can be improved.

Note that, although the example is described in the present embodiment in which the whole barrier wall 41 is formed of part of the light-transmitting panel 32 as depicted in Fig. 5, this is not meant to be restrictive and, for example, the barrier wall 41 may be formed of part of the light-transmitting panel 32 and part of the fixture main body 10.

### (Third Embodiment)

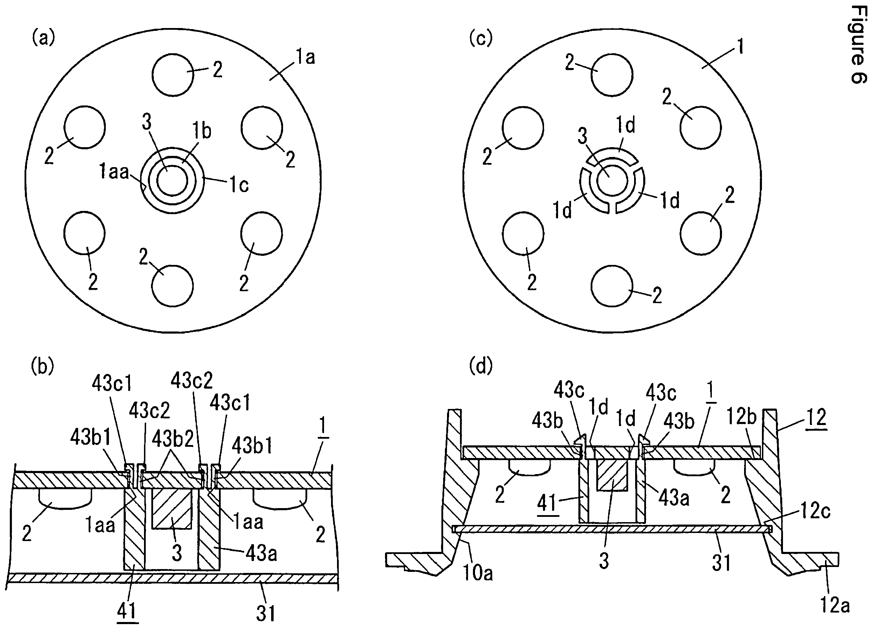

An illumination fixture of the present embodiment is different from that of the first embodiment in that, as depicted in Fig. 6 (a), the illumination fixture includes: a first base substrate 1a formed in a circular plate shape and having a through hole 1aa penetrating through a center portion and a second base substrate 1b formed in a circular plate shape and having an outer shape formed smaller than the through hole 1aa and disposed inside the through hole 1aa, the light-emitting parts 2 is mounted on the first base substrate 1a and the sensor part 3 is mounted on the second base substrate 1b, and the barrier wall 41 holds the second base substrate 1b and is mounted on the first base substrate 1a. Note that a configuration similar to that of the first embodiment is provided with the same character and is not described herein.

Here, as depicted in Fig. 6 (b), the barrier wall 41 is formed of a material (for example, acrylic resin) having a high transmittance of visible light emitted from the light-emitting parts 2 and a low transmittance of infrared rays radiated from the light-emitting parts 2 toward the sensor part 3, and has a plurality of first leg pieces 43b1 and a plurality of second leg pieces 43b2 extending from an end face on a first base substrate 1a side and an end face on a second base substrate 1b side to the first base substrate 1a side and the second base substrate 1b side. Also, each of the first leg pieces 43b1 has a tip portion formed with a first nail piece 43c1 protruding to a side facing an inner perimeter portion of the through hole 1aa of the first base substrate 1a, and each of the second leg pieces 43b2 has a tip portion formed with a second nail piece 43c2 protruding to a side facing an outer perimeter portion of the second base substrate 1b. The barrier wall 41 inserts each of the first leg pieces 43b1 and each of the second leg pieces 43b2 in a space 1c to engage the first nail piece 43c1 in an inner perimeter portion of the through hole 1aa of the first base substrate 1a and engage the second nail piece 43c2 in an outer perimeter portion of the second base substrate 1b, thereby holding the second base substrate 1b and being mounted on the first base substrate 1a. Furthermore, in the illumination fixture of the present embodiment, as depicted in Figs. 6 (a) and (b), the sensor part 3 is formed in a circular shape in a plan view.

Thus, with the space 1c being formed between the first base substrate 1a and the second base substrate 1b, compared with the illumination fixture described in the first embodiment and the second embodiment in which the light-emitting parts 2 and the sensor part 3 are mounted on the same base substrate 1, heat occurring at the light-emitting parts 2 and transferred to the sensor part 3 via the base substrate 1a and the second base substrate 1b can be reduced. Therefore, an increase in temperature of the sensor part 3 can be suppressed.

Also, in the illumination fixture of the present embodiment, as depicted in Figs. 6 (c) and (d), the light-emitting parts 2 and the sensor part 3 may be disposed on one surface side of the same base substrate 1, and a plurality of slits 1d (in the example depicted in Fig. 6 (c), three) may be provided between the light-emitting parts 2 and the sensor part 3 on the base substrate 1. The barrier wall 41 may be formed of a material that lets the visible light emitted from the light-emitting parts 2 pass and interrupts the infrared ray radiated from the light-emitting parts 2 toward the sensor part 3, and may have a plurality of leg pieces 43b extending from an end face on a base substrate 1 side to the base substrate 1 side. Each of the leg pieces 43b has a tip portion formed with a nail portion 43c. With each of the leg pieces 43b being inserted in the slit 1d to engage the nail piece 43c in a perimeter portion of the slit 1d, each of the leg pieces may be removably mounted on the base substrate 1.

Thus, since the barrier wall 41 is removably mounted on the base substrate 1, assembling can be improved.

Note that, although the example is described in the present embodiment in which the barrier wall 41 and the light-transmitting panel 31 are formed of separate members, this is not meant to be restrictive and, for example, as in the second embodiment, the barrier wall 41 and the light-transmitting panel 31 may be formed so as to be successively integrated.

### (Fourth Embodiment)

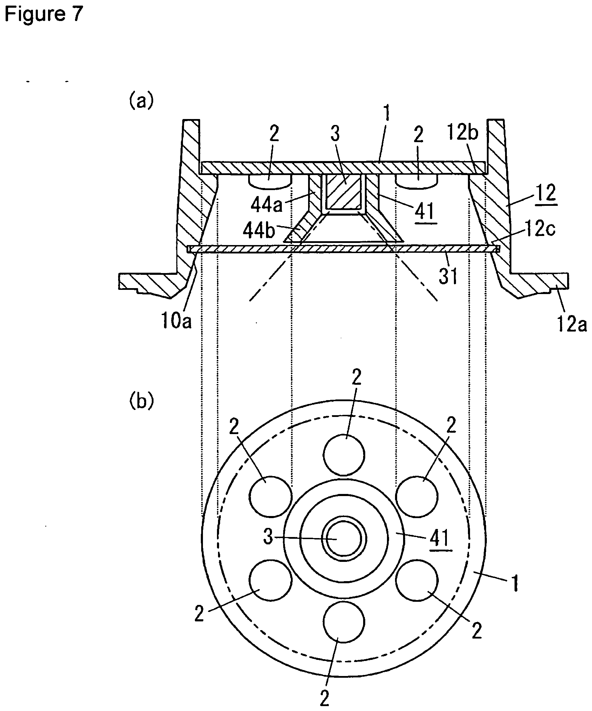

An illumination fixture of the present embodiment is different from that of the first embodiment in that, as depicted in Fig. 7, the illumination fixture includes the barrier wall 41 configured of a cylinder-shaped portion 44a formed in a cylinder shape and having the sensor part 3 disposed therein and a cone-shaped portion 44b formed in a cone shape successive to another end side on a side opposite to one end connected to the base substrate 1 in the cylinder-shaped portion 44a and having an inner diameter larger as being away from the base substrate 1. Note that a configuration similar to that of the first embodiment is provided with the same character and is not described herein.

Here, with the cone-shaped portion 44b in the barrier wall 41 being formed in a shape larger as being away from the base substrate 1, part of the sensing area of the sensor part 3 can be set so as to be prevented from being interrupted by the barrier wall 41 even when the outer diameter of the cylinder-shaped portion 44a in the barrier wall 41 is small (refer to a one-dot-chain line in Fig. 7).

Therefore, while the barrier wall 41 is prevented from interrupting part of the sensing area of the sensor part 3, the outer diameter of the cylinder-shaped portion 44a in the barrier wall 41 is decreased to decrease the distance between the light-emitting parts 2 and the sensor part 3, thereby decreasing the outer dimension of the base substrate 1. Therefore, while the size of the sensing area of the sensing part 3 is kept, the illumination fixture can be downsized.

Note that, although the example of the illumination fixture is described in the present embodiment in which the barrier wall 41 and the light-transmitting panel 31 are formed of separate members, this is not meant to be restrictive and, for example, the barrier wall 41 and the light-transmitting panel 31 may be formed so as to be successively integrated. Alternatively, the cone-shaped portion 44b in the barrier wall 41 and the light-transmitting panel 31 may be formed so as to be successively integrated, and the cylinder-shaped portion 44a in the barrier wall 41 and the fixture main body 10 may be formed so as to be successively integrated.

Also, in the present embodiment, as with the illumination fixture described in the third embodiment, the illumination fixture may be configured to include: a first base substrate (not shown) formed in a circular plate shape and having a through hole (not shown) penetrating through a center portion; and a second base substrate (not shown) formed in a circular plate shape and having an outer shape formed smaller than the through hole and disposed inside the through hole, the light-emitting parts 2 are mounted on the first base substrate and the sensor part 3 is mounted on the second base substrate, and the barrier wall 41 is mounted on the first base substrate and holds the second base substrate. Alternatively, as with the illumination fixture described in the third embodiment, the illumination fixture may be configured such that the light-emitting parts 2 and the sensor part 3 are disposed on one surface side of the same base substrate 1, and a plurality of slits (not shown) are provided between the light-emitting parts 2 and the sensor part 3 on the base substrate 1, the barrier wall 41 has leg pieces (not shown) extending from an end face of the cylinder-shaped portion 44a on the base substrate 1 side to the base substrate 1 side, the leg pieces each have its tip portion formed with a nail piece (not shown), and the leg pieces are inserted in the slits to engage the nail pieces in a perimeter portion of the slits to be removably mounted on the base substrate 1.

### [Description of Reference Numerals]

- 1: base substrate
- 1a: first base substrate
- 1aa: through hole
- 1b: second base substrate
- 1c: space
- 1d: slit
- 2: light-emitting part
- 3: sensor part
- 10: fixture main body
- 10a: opening
- 31, 32a: light-transmitting panel
- 41: barrier wall
- 43b: leg piece
- 43b1: first leg piece
- 43b2: second leg piece
- 43c: nail piece
- 43c1: first nail piece
- 43c2: second nail piece
- 44a: cylinder-shaped portion (tube-shaped portion)
- 44b: cone-shaped portion

## Claims

1. An illumination fixture comprising:
a light-emitting part (2) having a light-emitting element;
a sensor part (3) having an infrared sensor element;
a lighting device having control means adapted to light and light off the light-emitting part by controlling power to be supplied to the light-emitting part based on an output from the sensor part; and
a fixture main body (10) that holds the light-emitting part (2) and the sensor part (3), wherein:
a barrier wall (41) that lets visible light emitted from the light-emitting part pass and interrupts an infrared ray radiated from the light-emitting part toward the sensor part is disposed between the light-emitting part and the sensor part,
wherein:
the illumination fixture comprises a first base substrate (1a) formed in a plate shape and having a through hole (1aa) penetrating through a center portion and a second base substrate (1b) formed in a plate shape and having an outer shape formed smaller than the through hole and disposed inside the through hole;
the light-emitting part is mounted on the first base substrate and the sensor part is mounted on the second base substrate;
the barrier wall is formed of a material that lets the visible light emitted from the light-emitting part pass and interrupts the infrared ray radiated from the light-emitting part toward the sensor part and has a plurality of first leg pieces (43b1) and a plurality of second leg pieces (43b2) extending from an end face of the barrier wall on a first base substrate side and an end face on a second base substrate side to the first base substrate side and the second base substrate side;
each of the first leg pieces has a tip portion formed with a first nail piece (43c1) protruding to a side facing an inner perimeter portion of the through hole of the first base substrate;
each of the second leg pieces has a tip portion formed with a second nail piece (43c2) protruding to a side facing an outer perimeter portion of the second base substrate; and
with each of the first leg pieces and each of the second leg pieces being inserted in a space between the first base substrate and the second base substrate to engage the first nail pieces in a perimeter portion of the through hole of the first base substrate and engage the second nail pieces in the outer perimeter portion of the second base substrate, the barrier wall is mounted on the first base substrate and holds the second base substrate,
the barrier wall being formed in a shape to have a height from the surface of the base substrate so as not to interfere with a sensing area of the sensor part (3).

2. The illumination fixture according to claim 1, wherein:
the illumination fixture comprises the fixture main body having an opening (10a) for removing the visible light emitted from the light-emitting part to outside of the fixture main body and a light-transmitting panel (31, 32a) disposed so as to cover the opening of the fixture main body;
the light-transmitting panel is formed of a material that lets the visible light emitted from the light-emitting part pass and interrupts the infrared ray radiated from the light-emitting part toward the sensor part; and
the barrier wall is formed so as to be successively integrated with the light-transmitting panel.

3. The illumination fixture according to claim 1, wherein
the barrier wall is removably mounted on the first base substrate.

4. The illumination fixture according to any one of claims 1 to 3, wherein:
the barrier wall is formed of a tube-shaped portion formed in a tube shape and having the sensor part disposed therein and a cone-shaped portion formed in a cone shape connected to the tube-shaped portion and having an inner diameter larger as being away from the tube-shaped portion.

## Patentansprüche

1. Beleuchtungsvorrichtung, aufweisend:
ein lichtemittierendes Teil (2) mit einem lichtemittierenden Element;
ein Sensorteil (3) mit einem Infrarotsensorelement;
eine Beleuchtungseinrichtung mit Steuermitteln, die dazu angepasst sind, das lichtemittierende Teil durch Steuerung der Leistung, die dem lichtemittierenden Teil zur Verfügung gestellt werden soll basierend auf einer Ausgabe des Sensorteils einzuschalten und auszuschalten; und
ein Vorrichtungshauptkörper (10), der das lichtemittierende Teil (2) und das Sensorteil (3) hält, wobei:
eine Barrierewand (41), die sichtbares Licht, abgegeben von dem lichtemittierenden Teil durchlässt und einen Infrarotstrahl unterbricht, der von dem lichtemittierenden Teil zu dem Sensorteil abgestrahlt wird, zwischen dem lichtemittierenden Teil und dem Sensorteil angeordnet ist,
wobei:
die Beleuchtungsvorrichtung ein erstes Basissubstrat (1a), das in einer Plattenform geformt ist und ein Durchgangsloch (1aa) aufweist, das durch einen Zentralabschnitt eindringt, und ein zweites Basissubstrat (1b) aufweist, das in einer Plattenform geformt ist und eine äußere Form aufweist, die kleiner geformt ist als das Durchgangsloch und innerhalb des Durchgangslochs angeordnet ist;
das lichtemittierende Teil auf dem ersten Basissubstrat befestigt ist und der Sensorteil auf dem zweiten Basissubstrat befestigt ist;
die Barrierewand aus einem Material gebildet ist, die sichtbares Licht, ausgegeben von dem lichtemittierenden Teil, passieren lässt und den Infrarotstrahl, der von dem lichtemittierenden Teil zu dem Sensorteil abgestrahlt wird, unterbricht und eine Vielzahl von ersten Beinteilen (43b1) und eine Vielzahl von zweiten Beinteilen (43b2) aufweist, die sich von einer Stirnseite der Barrierewand auf einer Erstes-Basissubstrat-Seite und einer Stirnseite auf einer Zweites-Basissubstrat-Seite zu der Erstes-Basissubstrat-Seite und der Zweites-Basissubstrat-Seite erstrecken;
wobei jedes erste Beinteil einen Spitzenabschnitt, gebildet mit einem ersten Nagelteil (43c1) aufweist, der zu einer Seite vorsteht, die einem inneren Umfangsabschnitt des Durchgangslochs des ersten Basissubstrats zugewandt ist;
wobei jedes zweite Beinteil einen Spitzenabschnitt aufweist, der mit einem zweiten Nagelteil (43c2) gebildet ist, das zu einer Seite vorsteht, die einem äußeren Umfangsabschnitt des zweiten Basissubstrats zugewandt ist; und
wobei jedes erste Beinteil und jedes zweite Beinteil in einen Raum zwischen dem ersten Basissubstrat und dem zweiten Basissubstrat eingefügt ist, um die ersten Nagelteile mit einem Umfangsabschnitt des Durchgangslochs des ersten Basissubstrats in Eingriff zu bringen und die zweiten Nagelteile mit dem äußeren Umfangsabschnitt des zweiten Basissubstrats in Eingriff zu bringen, wobei die Barrierewand auf dem ersten Basissubstrat befestigt ist und das zweite Basissubstrat hält,
wobei die Barrierewand in einer Gestalt geformt ist, um eine Höhe von der Oberfläche des Basissubstrats aufzuweisen, um einen Erfassungsbereich des Sensorteils (3) nicht zu beeinträchtigen.

2. Beleuchtungsvorrichtung nach Anspruch 1, wobei:
die Beleuchtungsvorrichtung den Vorrichtungshauptkörper aufweist, der eine Öffnung (10a) zum Entfernen des sichtbaren Lichts, ausgegeben von dem lichtemittierenden Teil aus dem Vorrichtungshauptkörper heraus, und
eine lichtdurchlässige Scheibe (31, 32a) aufweist, die angeordnet ist, um die Öffnung des Vorrichtungshauptkörpers abzudecken;
die lichtdurchlässige Scheibe aus einem Material gebildet ist, das das sichtbare Licht, ausgegeben von dem lichtemittierenden Teil, durchlässt und den Infrarotstrahl, der von dem lichtemittierenden Teil zu dem Sensorteil abgestrahlt wird, unterbricht; und
die Barrierewand gebildet ist, um mit der lichtdurchlässigen Scheibe hintereinander integriert zu sein.

3. Beleuchtungsvorrichtung nach Anspruch 1,
wobei die Barrierewand lösbar auf dem ersten Basissubstrat befestigt ist.

4. Beleuchtungsvorrichtung nach einem beliebigen der Ansprüche 1-3, wobei:
die Barrierewand aus einem röhrenförmigen Abschnitt, der in einer Röhrengestalt geformt ist, und den darin angeordneten Sensorteil aufweist, und einem konusförmigen Abschnitt gebildet ist, der in einer Konusgestalt geformt ist, die mit dem röhrenförmigen Abschnitt verbunden ist, und einen inneren Durchmesser aufweist, der größer weg von dem röhrenförmigen Abschnitt ist.

## Revendications

1. Appareil d'éclairage comprenant :
une partie émettant de la lumière (2) comportant un élément émettant de la lumière ;
une partie capteur (3) comportant un élément formant capteur infrarouge ;
un dispositif d'éclairage comportant un moyen de commande adapté pour allumer et éteindre la partie émettant de la lumière en commandant l'alimentation à fournir à la partie émettant de la lumière d'après une sortie provenant de la partie capteur ; et
un corps principal d'appareil (10) qui sert de support à la partie émettant de la lumière (2) et à la partie capteur (3), dans lequel :
une paroi barrière (41) qui laisse passer la lumière visible émise par la partie émettant de la lumière et qui arrête un rayon infrarouge diffusé par la partie émettant de la lumière vers la partie capteur est placée entre 1a partie émettant de la lumière et la partie capteur,
dans lequel :
l'appareil d'éclairage comprend un premier substrat de base (1a) en forme de plaque et comportant un trou traversant (1aa) qui traverse une partie centrale et un deuxième substrat de base (1b) en forme de plaque et dont la forme extérieure est plus petite que le trou traversant et est placée à l'intérieur du trou traversant ;
la partie émettant de la lumière est montée sur le premier substrat de base et la partie capteur est montée sur le deuxième substrat de base ;
la paroi barrière est faite d'un matériau qui laisse passer la lumière visible émise par la partie émettant de la lumière et qui arrête le rayon infrarouge diffusé par la partie émettant de la lumière vers la partie capteur et comporte une pluralité de premières pattes (43b1) et une pluralité de deuxièmes pattes (43b2) qui s'étendent depuis une face d'extrémité de la paroi barrière sur un côté du premier substrat de base et une face d'extrémité sur un côté du deuxième substrat de base vers le côté du premier substrat de base et le côté du deuxième substrat de base ;
chacune des premières pattes a une partie de bout pourvue d'un premier clou (43c1) faisant saillie vers un côté faisant face à une partie de périmètre intérieur du trou traversant du premier substrat de base ;
chacune des deuxièmes pattes a une partie de bout pourvue d'un deuxième clou (43c2) faisant saillie vers un côté faisant face à une partie de périmètre extérieur du deuxième substrat de base ; et
avec chacune des premières pattes et chacune des deuxièmes pattes insérée dans un espace situé entre le premier substrat de base et le deuxième substrat de base pour se mettre en prise avec les premiers clous dans une partie de périmètre du trou traversant du premier substrat de base et pour se mettre en prise avec les deuxièmes clous dans la partie de périmètre extérieur du deuxième substrat de base, la paroi barrière est montée sur le premier substrat de base et retient le deuxième substrat de base,
la paroi barrière ayant une forme dont la hauteur depuis la surface du substrat de base est prévue pour ne pas gêner une zone de détection de la partie capteur (3).

2. Appareil d'éclairage selon la revendication 1, dans lequel :
l'appareil d'éclairage comprend le corps principal d'appareil ayant une ouverture (10a) pour éliminer la lumière visible émise par la partie émettant de la lumière vers l'extérieur du corps principal d'appareil et un panneau de transmission de lumière (31, 32a) placé de manière à couvrir l'ouverture du corps principal d'appareil ;
le panneau de transmission de lumière est fait d'un matériau qui laisse passer la lumière visible émise par la partie émettant de la lumière et qui arrête le rayon infrarouge diffusé par la partie émettant de la lumière vers la partie capteur ; et
la paroi barrière est formée de façon à être intégrée successivement au panneau de transmission de lumière.

3. Appareil d'éclairage selon la revendication 1, dans lequel la paroi barrière est montée de façon amovible sur le premier substrat de base.

4. Appareil d'éclairage selon l'une quelconque des revendications 1 à 3, dans lequel :
la paroi barrière est faite d'une partie en forme de tube qui est mise sous la forme d'un tube et dans laquelle est placée la partie capteur et d'une partie en forme de cône qui est mise sous la forme d'un cône relié à la partie en forme de tube et ayant un diamètre intérieur croissant lorsque l'on s'éloigne de la partie en forme de tube.
